# EUROPEAN PATENT APPLICATION

(11) **EP 1 588 747 A1**
(43) Date of publication of application: **26.10.2005**
(21) Application number: 03736287.8
(22) Date of filing: 27.06.2003
(51) Int. Cl.: A63F 13/10, A63F 13/12

(54) **GAME PROCEEDING SYNCHRONIZATION SYSTEM AND PROGRAM**

(30) Priority: 14.01.2003 JP 2003006294
(71) Applicant: Konami Corporation, Chiyoda-ku, Tokyo 100-6330 (JP)
(72) Inventor: OKAMURA, Noriaki, c/o KONAMI COMP. ENT. JAPAN INC., Tokyo 150-6006 (JP)
(74) Representative: Skuhra, Udo
(86) International application number: PCT/JP2003/008206
(87) International publication number: WO 2004/062756

(57) **Abstract**

A game proceeding synchronization system develops a common game synchronized in a plurality of terminal devices and can display at least one of the common display in the display screen of the terminal device and the display related to the common display. It is preferable that while the display screen of each terminal device is displayed or after the display is complete, a screen display switching instruction can be input from the input unit of each terminal device and switching unit be provided for switching the screen display according to the number of screen display switching instructions input from each terminal device.

## Description

### TECHNICAL FIELD

The present invention relates to various game systems and game programs such as an adventure game, role playing game, and the like. More specifically, the present invention relates to a game system and game program, which execute synchronization control among game devices so as to switch screen contents to be displayed for players.

### BACKGROUND ART

In recent years, not only a player who has a game device solely plays a game using his or her own game device, but also a plurality of players who have game devices can play a single game together by connecting their game devices via cables. Such play form can be realized by connecting a game device to a network even when the plurality of players do not gather to one place. Furthermore, the player can enjoy such game using not only a dedicated game device but also a general-purpose personal computer (PC) by network connection.

In this play format, a battle game in which players battle against each other, and a role playing game and adventure game that proceeds by one party formed by a plurality of players can be enjoyed.

However, in the above play form, when the player plays a game at his or her pace like in a case wherein he or she enjoys the game using his or her game device or the like, discrepancy occurs from the game proceeding of another player to disturb his or her own game proceeding. In addition, the other player cannot catch up the game proceeding, thus suffering troubles with the game.

### DISCLOSURE OF INVENTION

The present invention has been made to solve the above problems, and has as its object to limit so that players will not play a game at their own arbitrary paces, to assure synchronization of the game proceeding among players, and to allow smooth game proceeding.

More specifically, according to the present invention, there is provided a game proceeding synchronization system which controls a plurality of terminal devices, each of which has a display screen and input unit that accepts an input from a player, and can execute a game by connecting to a network, to synchronously play a common game, and can display at least one of a common display in the game and a display related to the common display on the display screen of each terminal device, wherein the input unit of each terminal device can input a switching instruction of the screen display before or after display completion of at least one of the common display and the display related to the common display on the display screen of the terminal device, and the system preferably comprises switching unit for switching at least one of the common display and the display related to the common display in accordance with the number of switching instructions of the screen display input from the terminal devices.

According to another aspect of the present invention that can achieve the above object, there is provided a game proceeding synchronization system which has a plurality of terminal devices, each of which has a display screen and an input unit that accepts an input from a player, and can execute a game by connecting to a network, and controls the plurality of terminal devices to synchronously play a common game, characterized in that at least one of a common display in the game and a display related to the common display can be displayed on the display screen of each terminal device, a switching instruction of the screen display can be input from the input unit of each terminal device before or after display completion of at least one of the common display and the display related to the common display on the display screen of the terminal device, each terminal device can recognize the switching instructions from the input unit of other terminal devices, and each terminal device comprises switching unit for switching the self screen display in accordance with the number of switching instructions of the screen display input from the terminal devices.

The above object can also be achieved by providing a program that makes a computer function as the aforementioned game proceeding synchronization system.

Other features and advantages of the present invention will become apparent from the following description taken in conjunction with the accompanying drawings. Also, common reference numerals denote the same or similar components throughout the drawings to facilitate identification.

### BRIEF DESCRIPTION OF DRAWINGS

The features and advantages of the present invention will be sufficiently understood by reading the detailed description of the preferred embodiments together with the following accompanying drawings.
Fig. 1A is a block diagram showing an example of the basic arrangement of a game device according to an embodiment of the present invention;
Fig. 1B is a block diagram showing an example of the basic arrangement of a server according to the embodiment of the present invention;
Fig. 2A shows an example of the screen display according to the embodiment of the present invention;
Fig. 2B shows an example of the screen display according to the embodiment of the present invention;
Fig. 3 is a diagram showing an example of the configuration of a game system according to the first embodiment of the present invention;
Fig. 4 is a flowchart of game proceeding synchronization processing according to the first embodiment of the present invention;
Fig. 5 is a flowchart of game proceeding synchronization processing according to the second embodiment of the present invention;
Fig. 6 is a diagram showing an example of the configuration of a game system according to the fourth embodiment of the present invention;
Fig. 7 is a flowchart of game proceeding synchronization processing according to the fourth embodiment of the present invention;
Fig. 8 shows an example of the screen display according to the fifth embodiment of the present invention;
Fig. 9 is a flowchart of game proceeding synchronization processing according to the third embodiment of the present invention; and
Fig. 10 shows an example of the configuration of a time-limit table according to the third embodiment of the present invention.

### BEST MODE FOR CARRYING OUT THE INVENTION

Preferred embodiments of the present invention will be described in detail hereinafter with reference to the accompanying drawings. In the following description, embodiments in which the present invention is applied to an adventure game will be explained. The present invention is not limited to the adventure game, but it can also be applied to a role playing game, sports game, battle game, and the like.

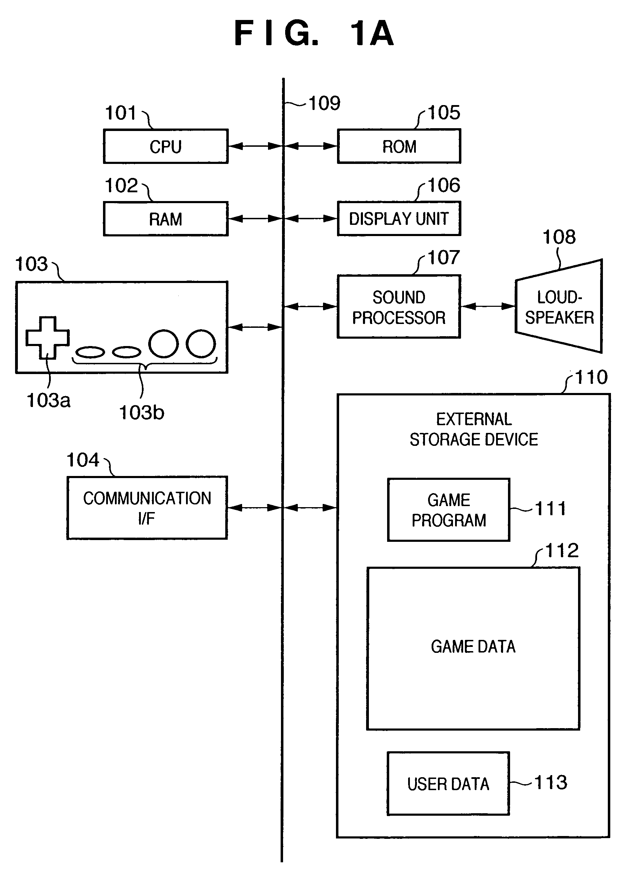

Fig. 1A shows the basic arrangement of a game device which also serves as a terminal device in this embodiment. Reference numeral 101 denotes a CPU, which controls the overall game device and also executes game proceeding synchronization control using programs, data, and the like stored in a RAM (random-access memory) 102 and ROM (read-only memory) 105. Reference numeral 102 denotes a RAM which comprises an area for loading a game program 111 and game data 112 which are stored in an external storage device 110, and also a work area used when the CPU 101 executes various processes.

Reference numeral 103 denotes an operation unit which serves as input unit that accepts inputs from the player, and includes an instruction input unit 103a used to instruct movements of characters, a cursor, and the like, and an input button group 103b used to input game proceeding instructions, OK and cancel instructions, and the like. The form of the operation unit 103 is not limited to that illustrated in Fig. 1A. For example, an analog stick may be used in place of the instruction input unit 103a and input button group 103b.

Reference numeral 104 denotes a communication I/F (interface), which serves as an I/F used to connect another game device via a cable or to connect the Internet or LAN (local area network). Reference numeral 105 denotes a ROM which stores programs (e.g., a boot program of this game device), data (e.g., setting data of this game device), and the like, which are used to control the overall game device.

Reference numeral 106 denotes a display unit as a display screen, which comprises a CRT or a liquid crystal display, and displays a screen associated with the game (a screen during the game, and a screen used to make various settings in the game).

Reference numeral 107 denotes a sound processor, which generates BGM and effect sounds on the basis of sound data included in the game data 112, and outputs the generated BGM and effect sounds to a loudspeaker 108.

Reference numeral 110 denotes an external storage device which comprises a CD-ROM, DVD-ROM, ROM cartridge, hard disk, or the like, and stores the aforementioned game program 111 and game data 112, and user data 113. The data stored in this device are loaded onto the RAM 102 as needed. The game program 111 is used to control the overall game.

Reference numeral 112 denotes game data which includes data required to generate images of objects (characters, text, background screens, and the like) which form the game screen, the aforementioned sound data, various parameters, and the like.

When the player wants to execute an online game by connecting the game device to the network, the game program 111 and game data 112 include those downloaded from a predetermined server on the network that provides the game program. Using a package medium such as a CD-ROM, DVD-ROM, ROM cartridge, or the like together with the hard disk, some data may be downloaded from the predetermined server, while the main game program stored in the package medium may be used.

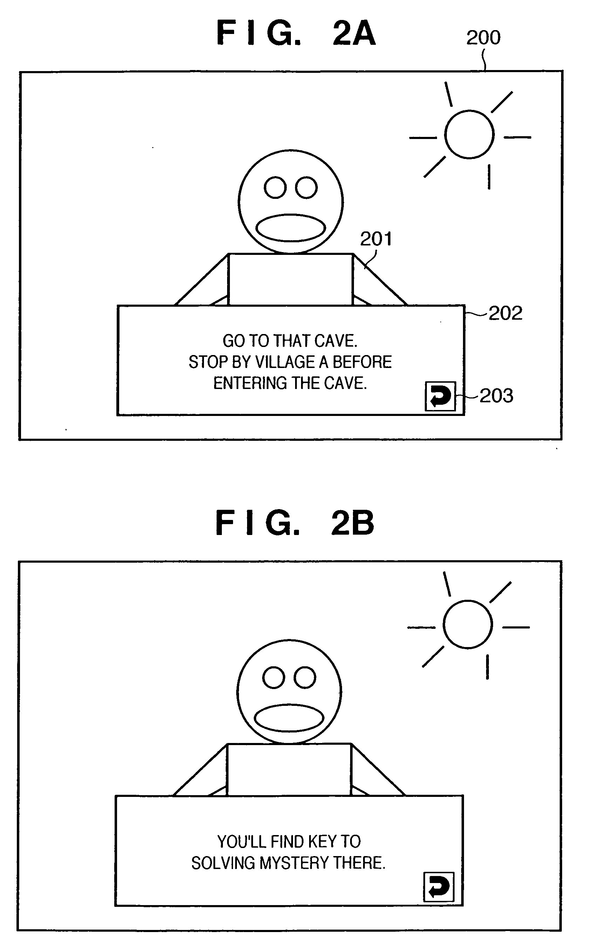

The user data 113 is associated with the previous game proceeding history and the like of the player. Reference numeral 109 denotes a bus which interconnects the aforementioned units. The game proceeding synchronization processing executed by the game device in this embodiment with the above arrangement will be described below. In an adventure game or role playing game, as shown in, e.g., Fig. 2A, a character 201 to be operated by each player, and a window 202 including lines delivered by a specific character or an explanation of a situation are displayed on the screen. After lines or the like for one screen are displayed, an indication that indicates completion of that display, e.g., a linefeed mark 203 in this case, is displayed. In this embodiment, the "linefeed mark" is exemplified, but indications such as "○","×","Δ","□", or the like other than the "linefeed mark" may be displayed instead. This linefeed mark serves to inform the player of completion of the display for one screen or the sequel to the lines or the like, and to prompt the player to press a predetermined button of the input button group 103b so as to switch the screen display.

In response to the display of this linefeed mark 203, the player can press the predetermined button to switch the screen to the next screen display (Fig. 2B) (in the following description, a description "press the linefeed mark 203" means that the player presses the predetermined button to switch the screen display in response to the display of the linefeed mark 203). With this operation, each player may recognize the current situation of a character that is operated by himself or herself or has a talk with a character operated by another player.

Since the screen shown in Fig. 2A as an example is provided as a common display to a plurality of players who are playing the identical game by connecting their game devices (including a PC; the same applies to the following description), the players are simultaneously watching the screen display of Fig. 2A. Also, some games provide not only a screen associated with the common display to a plurality of players but also a different screen (with some or all of different display contents) for each player as that of a display related to the common display. For example, it is the case that some keywords are required to clear a given stage, and different associated keywords are assigned to respective players. Put differently, the display related to the common display corresponds to that which is required to be displayed on the screen to make the common display in the future.

In this manner, when a common or different screen is provided to a plurality of players, if one of these players presses the linefeed mark 203 to switch to Fig. 2B, the screen is unwantedly switched even when some players have not finished watching of the screen of Fig. 2A. At this time, the players who do not recognize the contents of Fig. 2A can no longer recognize the game proceeding, or cannot recognize a keyword required to clear a stage. Hence, the control inhibits the screen display from being switched until all the players press the linefeed mark 203.

### <First Embodiment>

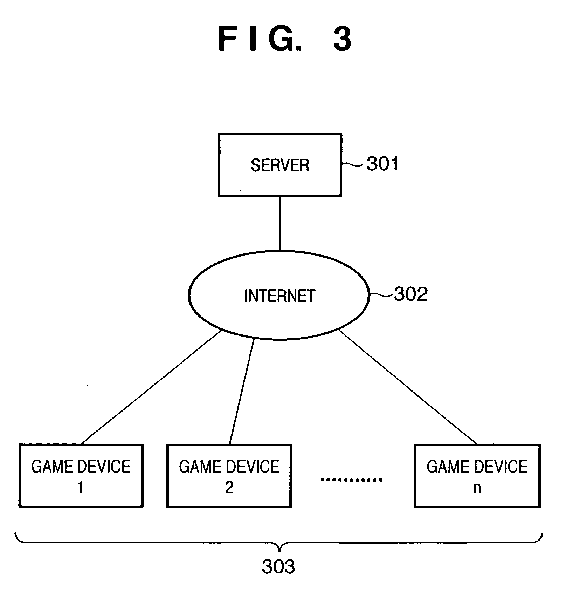

The configuration of the system that implements the aforementioned control according to the first embodiment of the present invention will be described below using Fig. 3. As shown in Fig. 3, in this embodiment, the game system is configured by a server 301, network 302, and game devices 303. The game devices 303 (game devices 1 to n) used by respective players are connected to the network 302, and communicate with the server 301. Note that the network includes a LAN or the Internet via the LAN, and the device may be connected to the Internet using a general or dedicated communication line via a provider. The server 301 transmits a program required to run a game, and data for screen display of the game device to the game devices 303, and controls the game proceeding by receiving an input signal (to be referred to as a player input signal hereinafter) on the basis of a button input of each player from the game device 303.

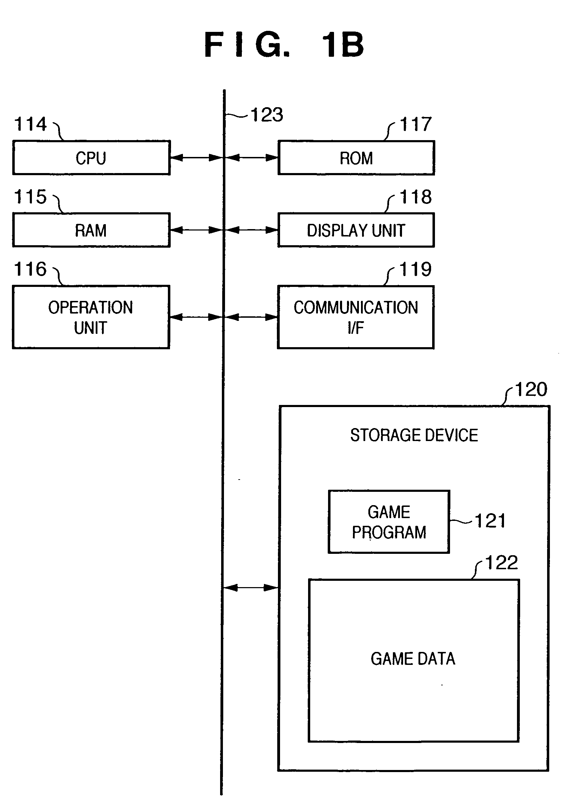

The basic arrangement of the server 301 is as shown in Fig. 1B. Reference numeral 114 denotes a CPU which controls the overall server. Reference numeral 115 denotes a RAM (random-access memory) which comprises an area for loading programs and data required to control the server 301, and also a work area used when the CPU 114 executes various processes. Reference numeral 116 denotes an operation unit. Reference numeral 117 denotes a ROM (read-only memory) which stores programs, data, and the like used to control the overall server. Reference numeral 119 denotes a communication I/F (interface) which serves as an interface that connects the Internet or LAN. Reference numeral 118 denotes a display unit which comprises a CRT or liquid crystal display, and displays predetermined information.

Reference numeral 120 denotes a storage device which stores a game program 121 and game data 122 to be distributed via the network, and stores a program required to run a game, data required to generate images of objects (characters, text, background screens, and the like) which form the game screen, sound data, and the like.

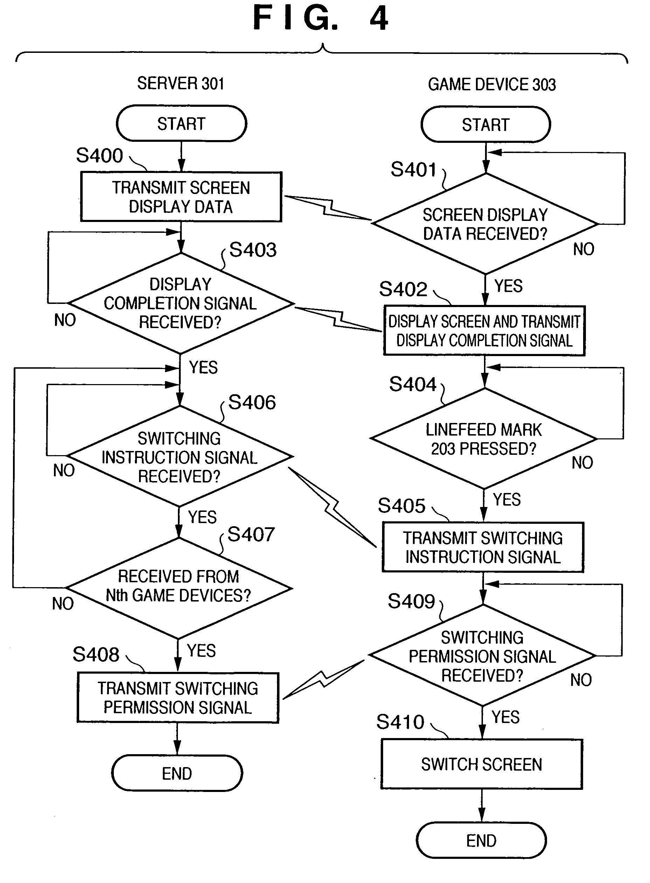

The game proceeding synchronization processing of the first embodiment will be described below with reference to the flowchart of Fig. 4. In Fig. 4, arrows that associate the steps of the server 301 and game device 303 indicate communications between them.

The server 301 transmits screen display data to the game devices 303 which have entered the game (S400). The screen display data to be transmitted is not one corresponding to one screen, but data having given relevance based on the screen display contents can be transmitted as one unit. Alternatively, screen display data for each screen may be transmitted.

The screen display data transmitted from the server 301 is received by each game device 303 (S401). The game device 303 makes a screen display on the display unit 106 on the basis of the received screen display data, and informs the serve 301 of completion of the display by transmitting a display completion signal to the server 301 upon completion of the screen display (S402). The server 301 receives the display completion signal transmitted from each game device 303 (S403).

After step S402, each game device 303 checks if the player has pressed the linefeed back 203 by pressing a given button of the input button group 103b (S404). If it is determined that the player has pressed the linefeed mark 203, the game device 303 transmits a switching instruction signal to the server 301 to notify it that the player issued a screen switching request (S405). If it is determined that the player has not pressed the linefeed mark 203, the game device 303 continues monitoring of a button input from the player.

The switching instruction signal transmitted from the game device 303 is received by the server 301 (S406). The server 301 checks if the switching instruction signals are received from Nth game devices of all the game devices 303 that have entered the game (S407).

Note that Nth may be, e.g., the number of all the game devices which have entered the game, or a value, which is obtained by subtracting a predetermined value (e.g., one game device) from the number of all the game devices which have entered the game. Alternatively, Nth may be a value obtained by multiplying the number of all the game devices which have entered the game by a predetermined ratio. Furthermore, Nth may be automatically calculated on the basis of the properties of the game, network, and the like. The CPU 114 in the server can serve as setting means for setting Nth by executing the predetermined processing. Upon accepting a setting of Nth from the client side, a value to be set as Nth may be transmitted from the game device 303 to the server 301 in accordance with an input from the operation unit 103 of the game device 303, and the CPU 114 serving as the setting means may set the setting value received by the server 301 as the value of Nth.

If the switching instruction signals are received from the Nth game devices 303, i.e., if the CPU 114 determines that the number of received switching instruction signals is Nth, the CPU 114 serves as screen display switching unit, i.e., it controls the server 301 to transmit a switching permission signal so as to notify each game device 303 of a screen switching permission (S408). If screen display data per screen is transmitted, the flow may return to step S401 to transmit another screen display data after transmission of the switching permission signal. On the other hand, if the switching instruction signals are not received from the Nth game devices 303, the server 301 continues monitoring of signals transmitted from the game devices 303 that have entered the game.

The switching permission signal transmitted from the server 301 is received by each game device 303 (S409). The game device 303 switches the screen display to be displayed on the display unit 106 upon reception of the switching permission signal (S410).

In place of transmitting data per screen, data of a given size may be transmitted, and upon reception of the switching instruction signals from all the game devices 303, a signal that notifies a screen switching permission (switching permission signal) may be transmitted. At this time, each game device 303 can switch the screen display on the display unit 106 upon reception of the switching permission signal.

As described above, since each game device 303 cannot switch the currently displayed screen display unless it receives the switching instruction signal is received from the server 301, the game proceedings can be synchronized among a plurality of players who have entered the identical game. More specifically, a behavior of some players who unilaterally play the game to disturb entry of other players to the game can be effectively prevented.

When Nth is a value smaller than the number of game devices that have entered the game, i.e., when the screen is permitted to be switched with the approval of a large majority of players, a behavior of some players who deliberately do not press the linefeed mark 203 to delay the game proceeding can be prevented to some extent, and the game proceeds by the majority opinion, thus allowing smooth game proceeding.

### <Second Embodiment>

In the first embodiment, the server 301 ceases to transmit the switching permission signal to the game devices 303 until it receives the switching instruction signals from Nth game devices. In this case, a behavior of some players who deliberately do not press the linefeed mark 203 to delay the game proceeding cannot always be prevented effectively.

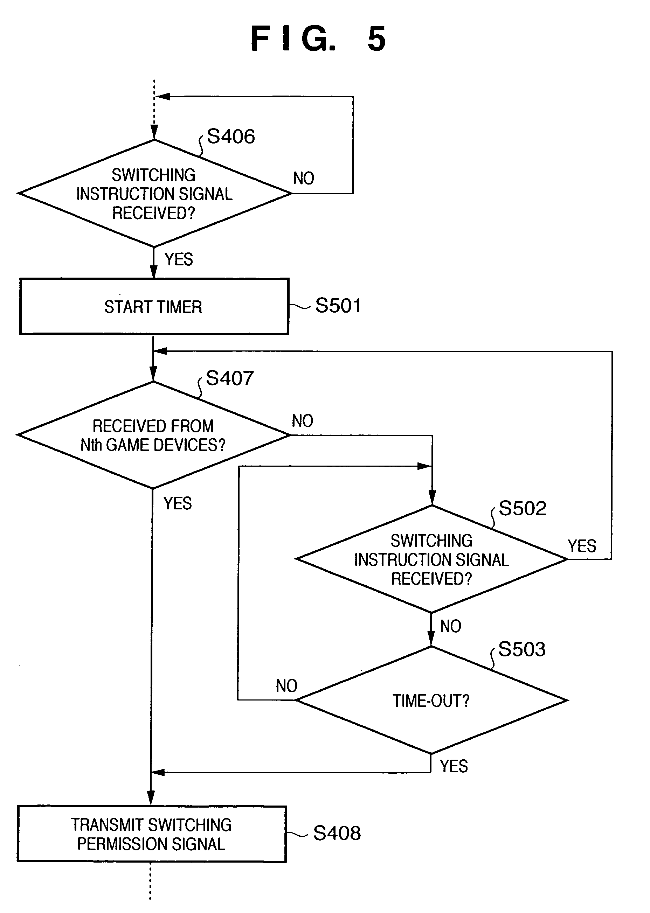

Hence, in the second embodiment of the present invention, in order to effectively prevent such delay behavior, a switching signal transmittable period, i.e., a time limit corresponding to the display period of the screen display can be set so as to abort the reception process of the switching instruction signals. More specifically, steps S501 to S503 are inserted between steps S406 to S408 in Fig. 4, as shown in Fig. 5. Upon reception of the switching instruction signal from one of a plurality of game devices 303 which have entered the game (S406), the server 301 starts a time set with a predetermined time limit (S501).

This time limit can be set to be, e.g., 1 minute, or can be arbitrarily changed in accordance with the contents of the game or those to be displayed on the screen. For example, if the importance of the screen is assumed to be low, the time limit may be set to be shorter than 1 minute; if it is assumed to be high, the time limit may be set to be longer than 1 minute.

After the time is started, the server 301 checks if the switching instruction signals are received from Nth game devices 303 as in the first embodiment. If the switching instruction signals are received from the Nth game devices 303, the flow advances to step S408 to transmit the switching permission signal to the respective game devices 303 as in the first embodiment.

On the other hand, if the switching instruction signals are not received from the Nth game devices 303, the server 301 checks if another switching instruction signal is received (step S502). If it is determined that another switching instruction signal is received, the flow returns to step S407 to check if the switching instruction signals are received from the Nth game devices.

If it is determined in step S502 that another switching instruction signal is not received, the server 301 checks in step S503 if the timer reaches a time-out. If the timer has does not reach a time-out, the flow returns to step S502 to continue monitoring of reception of the switching instruction signal. On the other hand, if it is determined in step S503 that the timer has reached a time-out, the flow advances to step S408 without waiting for a non-received switching instruction signal transmitted from the game device 303, and the server 301 transmits the switching permission signal to the game devices 303.

In the above case, it is checked in step S407 if switching signals are received from the Nth game devices 303, and only a time-out is used as a trigger to abort the reception process of the switching instruction signals. In addition, the number of received switching instruction signals can be used as a trigger to abort the reception process of the switching instruction signals. That is, whether or not the number of received switching instruction signals reaches a predetermined value, i.e., Nth, is checked in step S407 as a trigger to abort the reception process.

For example, assume that the number of game devices 303 that have entered the game is 10, and Nth is 7. When the switching instruction signals are received from the seven game devices, the control can start the next process without waiting for reception of switching instruction signals from the remaining three game devices.

When it is checked based only on the time setting if the reception process is to be aborted like in the prior art, a game delay behavior of some players can be preferably prevented, while the time limit must be changed according to screen information to be displayed. By contrast, according to this embodiment, since the checking process using the number of received switching instruction signal is combined, if the number of received signals has reached a predetermined value, it is estimated that other players recognize the information, and the switching permission signal can be transmitted independently of a time-out. Hence, the setting of the time limit need not be changed in detail for respective display contents, and the checking process for determining if the control starts the switching permission signal transmission process is facilitated.

In the above description, the timer start timing is set after reception of one switching instruction signal. The present invention is not limited to such specific timing. For example, the timer may start upon reception of the display completion signal in, e.g., step S403 in Fig. 4. More specifically, the timer may start upon reception of the first or second display completion signal or upon reception of the display completion signals from Nth game devices 303. In either case, since the screen display time of each game device 303 can be measured, it is effective to control the game proceeding from the viewpoint of the player.

As described above, according to this embodiment, since the game proceeding can be controlled in accordance with the reception state of switching instruction signals at the server 301, a behavior of some players who deliberately do not press the linefeed mark 203 to delay the game proceeding can be prevented.

### <Third Embodiment>

In the second embodiment, a time-out of the transmittable period of switching instruction signals is used as a trigger to abort the reception process of switching instruction signals. However, the time limit sets a time period until the screen display is switched, irrespective of a change in the number of received switching instruction signals.

A case will be examined below wherein the following hypothetical condition is applied to the second embodiment. That is, for a game executed by 10 game devices, after a switching instruction signal is received from the first game device, the timer with a time limit of 1 minute is started, and a screen switching permission signal is transmitted when the timer has reached a time-out or when switching instruction signals are received from a total of seven game devices. In this case, even when switching instruction signals are received from six game devices within the first 10 seconds, if no switching instruction signal is received from the remaining one game device, a screen switching instruction signal cannot be transmitted for the remaining 50 seconds.

In this way, when the time limit or the number of received signals is fixed in the second embodiment, the switching timing of the screen does not always match the average game proceeding level of the players who have entered the game, thus disturbing smooth game proceeding.

By contrast, in the third embodiment, the time limit is set as a time period after reception of a switching instruction signal until the next switching instruction signal is received, in place of a time period until the screen display is switched, thereby solving the aforementioned problem. Also, since the time limit is set for each reception of a switching instruction signal, the game proceeding according to the level of each party formed by a plurality of players who have entered the game can be allowed.

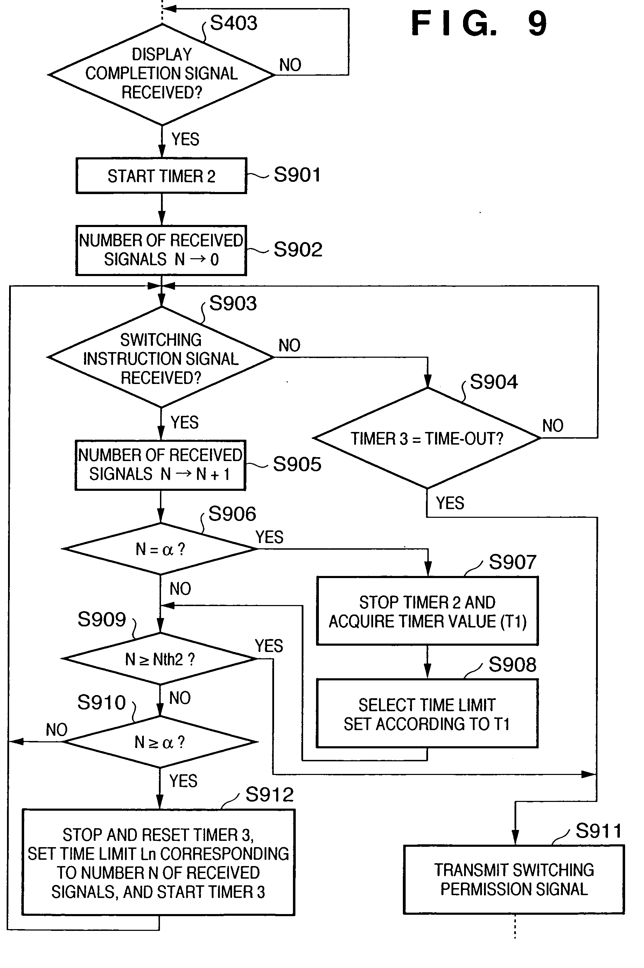

More specifically, the processes in steps S406 to S408 in Fig. 4 are replaced by steps S901 to S912 shown in Fig. 9. The processing based on the flowchart in Fig. 9 will be described below. In this embodiment, the timer in step S501 in Fig. 4 is read as timer 1.

In step S901 in Fig. 9, timer 2 is started after it is reset. This timer 2 is timepiece means used to measure a time period after reception of the display completion signal in step S403 in Fig. 4 until a switching instruction signal is received. Let T1 be the timer value of this timer 2. Next, in step S902 the number N of received switching instruction signals is reset (N *→* 0). Furthermore, it is checked in step S903 if a switching instruction signal is received. If no switching instruction signal is received, the flow advances to step S904. If timer 3 is set, it is checked in step S904 if timer 3 reaches a time-out. Timer 3 is timepiece means used to set a time limit after reception of the switching instruction signal until another switching instruction signal is received (this time limit corresponds to a screen display period after reception of the switching instruction signal). The time limit to be set in timer 3 is updated every time the switching instruction signal is received.

In this embodiment (in case of α = 1 to be described later), since timer 3 is started after reception of the first switching instruction signal, the time-out checking process at that time is nonsense. Hence, upon implementation, the process in step S904 may be skipped until the first switching instruction signal is received.

Upon reception of a switching instruction signal, the flow advances to step S905 to update the number of received signals. An update unit of the number of received signals is basically 1. However, depending on the setting of the timing for monitoring reception of the switching instruction signal in step S903, a plurality of switching signals may be received at substantially the same timings. In such case, the number of received signals may be updated accordingly.

It is checked in step S906 if the current number of received signal reaches a predetermined value α. If the time period after transmission of screen display data until the first switching instruction signal is received is to be measured, the checking process can be done by setting α = 1. Even in such use method, the switching instruction signal received first may be transmitted at a timing considerably earlier than the transmission timings of other players in a party formed by those who have entered that game. In consideration of such case, the checking process may be done by setting α = 2. If α is set to be a value corresponding to a predetermined ratio (e.g., 60%) of the number of players who form the party (if the party is formed by 10 players, α = 6 can be set), the process that reflects the average level of the party formed by the players who have entered the game can be made.

If the number of received signal switching instruction signals matches α in step S906, the flow advances to step S907 to stop timer 2 and to acquire the value (T1) of timer 2. In step S908, a set of time limits Ln to be set in timer 3 is selected from a time limit table on the basis of the value T1 acquired in step S907.

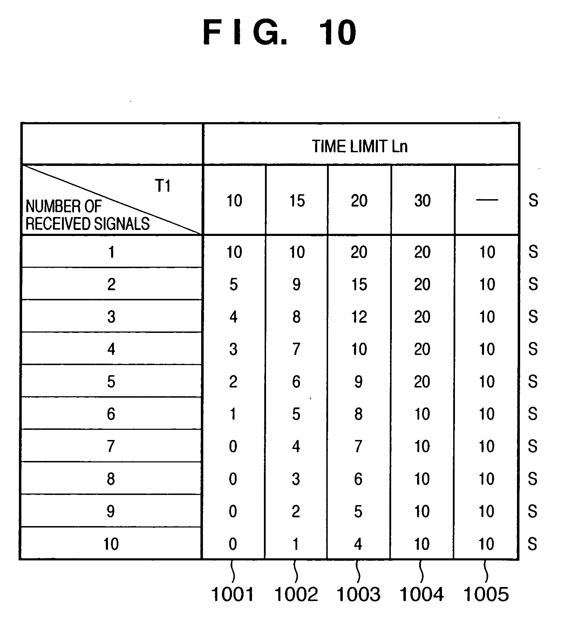

Fig. 10 shows an example of the configuration of the time limit table. Fig. 10 shows the table of time limits Ln under the assumption that 10 players form a party to play the game. The table shown in Fig. 10 is stored in, e.g., the storage device 120 in the server 301. Of course, one party formed by 10 players is merely an example of the party configuration, and the present invention is not limited to this. Hence, the storage means 120 preferably stores a plurality of tables in accordance with the number of players who form a party.

This table registers four different sets (1001 to 1004) of time limits Ln in accordance with the value T1 for the number N of received switching instruction signal = 1 to 10. Taking the time limit set 101 as an example, if T1 is within 10 seconds, this set 1001 of time limits Ln is selected, and a time limit value Ln in the set is set in timer 3 in accordance with the number of received signals. In the table, a set 1005 which sets a time limit value Ln to be a constant value irrespective of the value T1 may be registered.

Referring back to the description of Fig. 9, after the time limit table is selected in step S908, or if it is determined in step S906 that the number of received switching instruction signals does not meet a condition for making the control advance to the table selection process, it is checked in step S909 if the number of received switching signals reaches a value which suffices to switch the screen. A threshold Nth2 as a criterion for determining whether or not the screen display is to be switched is determined depending on the number of players (party size) who have entered the game.

Note that Nth2 may be the number of all game devices which have entered the game, or a value obtained by subtracting a predetermined value (e.g., one game device) from the number of all game devices which have entered the game, as in Nth in the first embodiment. Alternatively, Nth2 may be a value obtained by multiplying the number of all the game devices which have entered the game by a predetermined ratio. Furthermore, Nth2 may be automatically calculated on the basis of the properties of the game, network, and the like. The CPU 114 in the server can serve as setting means for setting Nth2 by executing the predetermined processing. Upon accepting a setting of Nth2 from the client side, a value to be set as Nth2 may be transmitted from the game device 303 to the server 301 in accordance with an input from the operation unit 103 of the game device 303, and the CPU 114 serving as the setting means may set the setting value received by the server 301 as the value of Nth2.

A practical example of the setting contents by the setting means will be described below. If a party is formed by 10 players, Nth2 = 7 can be set. If a party is formed by five players, Nth2 = 3 can be set.

If the number of received switching instruction signals is equal to or larger than the threshold Nth2 in step S909, the flow advances to step S911 to transmit a switching permission signal to the game devices 303.

On the other hand, if it is determined in step S909 that the number of received switching instruction signals is less than the threshold Nth2, the flow advances to step S910 to check if the number N of received signals is equal to or larger than α. This checking step copes with a case wherein since the number of received signals is less than α depending on the setting contents of α, a time limit set is not selected yet in step S908, and timer 3 cannot be set.

If the number N of received signals is less than α, reception of a switching instruction signal is monitored in step S903. On the other hand, if the number N of received signals is equal to or larger than α, since timer 3 can be set, timer 3 is stopped and reset in step S912, and is then started with a time limit value Ln corresponding to the current number N of received signals in the time limit set selected in step S908. For example, if α = 1 and T1 is within 10 seconds, the time limit value of timer 3 set after the first switching signal is 10 seconds.

After timer 3 is started in step S912, the flow returns to step S903 to check if another switching instruction signal is received within the range of the set time limit. If a new switching instruction signal is received within the range of time limit Ln set in step S912, the flow advances to step S905 to update the number N of received signals, and the aforementioned processes in step S906 and subsequent steps are repeated.

On the other hand, if it is determined in step S903 that no switching instruction signal is received, and if it is determined in step S904 that timer 3 has reached a time-out, the flow jumps to step S911 to transmit a switching permission signal.

A case will be explained below wherein the aforementioned hypothetical condition is applied to the above processing. For a game executed by 10 game devices, when switching instruction signals are received from six game device within 10 seconds after reception of the display completion signal, the switching instruction signals corresponding to N - α (α = 1 in the description corresponding to Fig. 9; i.e., corresponding to the switching instruction signal received first) are received within 10 seconds. Hence, in step S908 the time limit set 1001 is selected, and the time limit value of timer 3 is set to be 10 seconds in step S912 in response to reception of a switching signal from the first game device (N = 1 at this time). After that, every time a switching instruction signal is received from a game device, the time limit value of timer 3 is updated to 5 seconds, 4 seconds, 3 seconds, and 2 seconds. After reception of a switching instruction signal from the sixth game device (assume that no time-out is detected at that time before the switching instruction signal is received from the sixth game device), the time limit value set in step S912 is 1 second. Therefore, even if Nth = 7, if no switching instruction signal is received within 1 second after timer 3 is started, it is determined in step S904 that timer 3 has reached a time-out, and a switching permission signal is transmitted in step S911. Hence, the six players who have already transmitted switching instruction signals in an early stage need not wait for reception of a switching instruction signal from the seventh game device while watching the identical screen display endlessly.

As described above, in this embodiment, a time limit is set every time a switching instruction signal is received, and the game proceeding can be controlled in accordance with the overall skill level of players who have entered the game.

In this embodiment, since the time limit can be set depending on a time period from display completion until the number of received switching instruction signals has reached a predetermined value, the game proceeding can be controlled in accordance with the overall skill level of players who have entered the game.

Since the time limit value set according to the number of received signals can be set while reflecting a time period until the first (or second) switching signal is received in accordance with the setting value α, the game proceeding control corresponding to the level of each individual party can be made.

### <Fourth Embodiment>

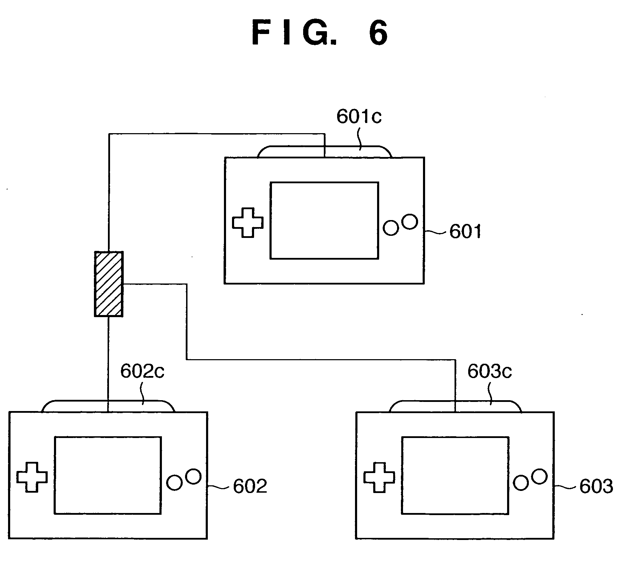

In the first to third embodiments, the game devices 303 are connected to a predetermined network such as the Internet or the like, and receive a program and the like required to execute the game from the server 301, thus configuring the game system, and providing the game to the players. By contrast, in the fourth embodiment of the present invention, game devices 601 to 603 are peer-to-peer connected via connection cables to form a game system, as shown in Fig. 6. The game device 601 or the like mounts a ROM cartridge (601c to 603c) that stores a program required to run the game, and predetermined data. Note that the game devices 601 to 603 have the arrangement corresponding to the basic arrangement of the game device shown in Fig. 1A, and a description of the arrangement itself of the game device 601 or the like will be omitted.

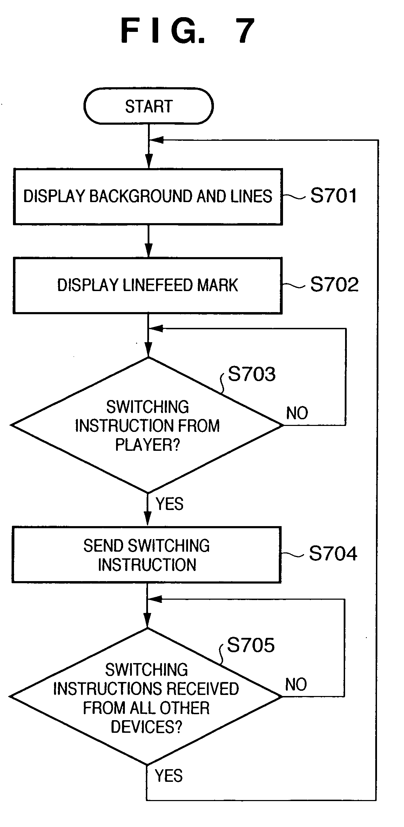

The game proceeding synchronization processing in this embodiment will be described below with reference to the flowchart of Fig. 7. The game devices 601 to 603 respectively display a background 201 (including a character) and lines 202 so as to display a screen corresponding to, e.g., Fig. 2A (S701).

After all lines to be displayed per screen are displayed, a linefeed mark 203 is displayed (S702). In response to the display of this linefeed mark 203, each player can issue a switching instruction of the screen display by pressing one of the input button group 103b. Hence, each of the game devices 601 to 603 monitors if the player of the own device has pressed this button. If the player has pressed the button, it is determined that the player issues a switching instruction, and the flow advances to step S704. On the other hand, if the button is not pressed, the control waits while monitoring depression of the button.

In step S704, in order to notify other game devices connected of a message indicating that the player issues a screen switching instruction by the button input, a switching instruction signal is transmitted. After the switching instruction message is sent, the control waits for switching instruction messages from other game devices (step S705). If the switching instruction messages are received from Nth of all the connected game devices, the flow returns to step S701 to switch the currently displayed screen contents under the control of the CPU 101 that serves as switching unit, thereby displaying a new background and lines. Note that Nth is a value having the same meaning as in the first embodiment, and a detailed description thereof will be omitted.

In this embodiment, the CPU 101 in each of the game devices 601 to 603 serves as the Nth setting means. For example, the CPU 101 sets the value of Nth in accordance with the input contents from the operation unit 103 by the player.

As described above, in the invention according to the fourth embodiment as well, a behavior of some players who play a game unilaterally to disturb entry of other players to the game can be effectively prevented.

### <Fifth Embodiment>

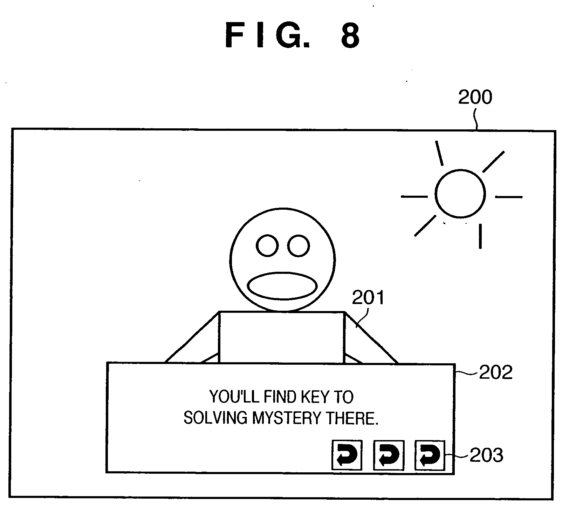

In the above embodiments, the screen display in the format shown in Figs. 2A and 2B is presented to the player. The format of the screen display presented to the player is not limited to that shown in Figs. 2A and 2B, and linefeed marks 203 as many as a total of the self machine and other machines in communication can be displayed, as shown in, e.g., Fig. 8. Especially, Fig. 8 exemplifies a case wherein two machines are connected in addition to the self machine.

Every time one of a plurality of connected machines inputs a switching instruction, it is controlled to clear the linefeed marks 203 displayed on the screen from the screen one by one. In this way, how many players are left behind can be recognized in real time.

For example, in the second embodiment, immediately after lines are displayed, linefeed marks 203 for 10 game devices are displayed, and each player can recognize that the number of displayed linefeed marks 203 gradually decreases in response to reception of switching signals from the players, and the screen is switched when the remaining number of linefeed marks reaches 3. In this way, the player who has already transmitted the switching instruction signal can wait while easily estimating the switching timing of the screen, and a stress due to aimless waiting for screen switching can be reduced. Such effect can be obtained in the first, third, and fourth embodiments, needless to say.

### <Other Embodiments>

When the aforementioned processes (those according to the flowcharts shown in Figs. 4, 5, 7, and 9 in the above embodiments) are stored as a program in a storage medium such as a CD-R, ROM, DVD-ROM, MO, or the like, and a computer reads out (installs or copies) the program stored in this storage medium, that computer can execute the aforementioned processes. Hence, this storage medium is included in the scope of the present invention.

The aforementioned processing for game proceeding synchronization control can also be implemented as a game proceeding synchronization method or a control method of a game proceeding synchronization system, which comprises the following steps.

The game proceeding synchronization method is directed to a game proceeding synchronization method which controls a plurality of terminal devices, each of which has a display screen and an input unit that accepts an input from a player, and can execute a game by connecting to a network, to synchronously play a common game, and can display at least one of a common display in the game and a display related to the common display on the display screen of each terminal device, characterized in that the input unit of each terminal device can input a switching instruction of the screen display before or after display completion of at least one of the common display and the display related to the common display on the display screen of the terminal device, and the method comprises a switching step of switching at least one of the common display and the display related to the common display in accordance with the number of switching instructions of the screen display input from the terminal devices.

The control method for the game proceeding synchronization system is directed to a method of controlling a game proceeding synchronization system which has a plurality of terminal devices, each of which has a display screen and an input unit that accepts an input from a player, and can execute a game by connecting to a network, and controls the plurality of terminal devices to synchronously play a common game, characterized in that at least one of a common display in the game and a display related to the common display can be displayed on the display screen of each terminal device, the input unit of each terminal device can input a switching instruction of the screen display before or after display completion of at least one of the common display and the display related to the common display on the display screen of the terminal device, each terminal device can recognize the switching instructions from the input units of other terminal devices, and each terminal device comprises a switching step of switching the self screen display in accordance with the number of switching instructions of the screen display input from the terminal devices.

The game proceeding synchronization method or the control method for the game proceeding synchronization system is characterized in that the switching step includes a step of switching the screen display in accordance with the number of switching instructions of the screen display input from the terminal devices, and a display time of the screen display.

The switching step may comprise a setting step of setting the number of switching instructions required to switch the display, or the switching step may comprise a step of starting measurement of the predetermined display time after the display completion.

Furthermore, the switching step may comprise a step of starting measurement of the predetermined display time after one of the terminal devices inputs the switching instruction, or may comprise a step of restarting measurement of the predetermined display time every time the switching instruction is input. Moreover, the switching step may comprise a step of changing the predetermined display time and restarting measurement of the changed display time in accordance with a time period from the display completion until the input of the switching instruction.

As described above, according to the present invention, in a plurality of game devices connected to a server via a network or a plurality of game devices which are peer-to-peer connected via connection cables or the like, the switching timing of a screen display of lines or an explanation of a situation can be preferably controlled. Hence, in the plurality of game devices, discrepancy of game proceeding can be prevented, efficient and smooth game proceeding is realized, and nuisance of some players can be effectively prevented.

Since the switching timing of the screen display can be controlled in accordance with the average level of players who have entered the game, the game proceeding can be controlled more effectively and smoothly.

## Claims

1. A game proceeding synchronization system which controls a plurality of terminal devices, each of which has a display screen and input unit that accepts an input from a player, and can execute a game by connecting to a network, to synchronously play a common game, and can display at least one of a common display in the game and a display related to the common display on the display screen of each terminal device, wherein:
the input unit of each terminal device can input a switching instruction of the screen display before or after display completion of at least one of the common display and the display related to the common display on the display screen of the terminal device, and
said system comprises switching unit for switching at least one of the common display and the display related to the common display in accordance with the number of switching instructions of the screen display input from the terminal devices.

2. A game proceeding synchronization system which has a plurality of terminal devices, each of which has a display screen and an input unit that accepts an input from a player, and can execute a game by connecting to a network, and controls the plurality of terminal devices to synchronously play a common game, wherein
at least one of a common display in the game and a display related to the common display can be displayed on the display screen of each terminal device, a switching instruction of the screen display can be input from the input unit of each terminal device before or after display completion of at least one of the common display and the display related to the common display on the display screen of the terminal device,
each terminal device can recognize the switching instructions from the input unit of other terminal devices, and
each terminal device comprises switching unit for switching the self screen display in accordance with the number of switching instructions of the screen display input from the terminal devices.

3. The system according to claim 1 or 2, wherein said switching unit switches the screen display in accordance with the number of switching instructions of the screen display input from the terminal devices and a display time of the screen display.

4. The system according to claim 1 or 2, wherein said switching unit comprises setting unit for setting the number of switching instructions required to switch the display.

5. The system according to claim 3, wherein said switching unit comprises setting unit for setting the number of switching instructions required to switch the display.

6. The system according to claim 3, wherein said switching unit starts measurement of the predetermined display time from the display completion.

7. The system according to claim 4, wherein said switching unit starts measurement of the predetermined display time from the display completion.

8. The system according to claim 5, wherein said switching unit starts measurement of the predetermined display time from the display completion.

9. The system according to claim 3, wherein said switching unit starts measurement of the predetermined display time after one of the terminal devices inputs the switching instruction.

10. The system according to claim 4, wherein said switching unit starts measurement of the predetermined display time after one of the terminal devices inputs the switching instruction.

11. The system according to claim 5, wherein said switching unit starts measurement of the predetermined display time after one of the terminal devices inputs the switching instruction.

12. The system according to claim 3, wherein said switching unit restarts measurement of the predetermined display time every time the switching instruction is input.

13. The system according to claim 4, wherein said switching unit restarts measurement of the predetermined display time every time the switching instruction is input.

14. The system according to claim 5, wherein said switching unit restarts measurement of the predetermined display time every time the switching instruction is input.

15. The system according to claim 12, wherein said switching unit changes the predetermined display time and restarts measurement of the display time.

16. The system according to claim 13, wherein said switching unit changes the predetermined display time and restarts measurement of the display time.

17. The system according to claim 14, wherein said switching unit changes the predetermined display time and restarts measurement of the display time.

18. The system according to claim 15, wherein said switching unit changes the predetermined display time in accordance with a time period from the display completion until the switching instruction is input, and restarts measurement of the display time.

19. The system according to claim 16, wherein said switching unit changes the predetermined display time in accordance with a time period from the display completion until the switching instruction is input, and restarts measurement of the display time.

20. The system according to claim 17, wherein said switching unit changes the predetermined display time in accordance with a time period from the display completion until the switching instruction is input, and restarts measurement of the display time.

21. A program for making a computer function as a game proceeding synchronization system of claim 1 or 2.

22. A program for making a computer function as a game proceeding synchronization system of claim 3.

23. A program for making a computer function as a game proceeding synchronization system of claim 4.

24. A program for making a computer function as a game proceeding synchronization system of claim 5.

25. A program for making a computer function as a game proceeding synchronization system of claim 6.

26. A program for making a computer function as a game proceeding synchronization system of claim 7.

27. A program for making a computer function as a game proceeding synchronization system of claim 8.

28. A program for making a computer function as a game proceeding synchronization system of claim 9.

29. A program for making a computer function as a game proceeding synchronization system of claim 10.

30. A program for making a computer function as a game proceeding synchronization system of claim 11.

31. A program for making a computer function as a game proceeding synchronization system of claim 12.

32. A program for making a computer function as a game proceeding synchronization system of claim 13.

33. A program for making a computer function as a game proceeding synchronization system of claim 14.

34. A program for making a computer function as a game proceeding synchronization system of claim 15.

35. A program for making a computer function as a game proceeding synchronization system of claim 16.

36. A program for making a computer function as a game proceeding synchronization system of claim 17.

37. A program for making a computer function as a game proceeding synchronization system of claim 18.

38. A program for making a computer function as a game proceeding synchronization system of claim 19.

39. A program for making a computer function as a game proceeding synchronization system of claim 20.
